# EUROPÄISCHE PATENTANMELDUNG

(11) **EP 4 831 791 A1**
(43) Veröffentlichungstag der Anmeldung: **28.10.2026**
(21) Anmeldenummer: 25172585.9
(22) Anmeldetag: 25.04.2025
(51) Int. Cl.: G06F 8/30, G06F 8/51, G06F 8/74, G06F 11/3668, G06N 20/00

(54) **TECHNIKEN ZUM BEWERTEN VON AUTOMATISIERT GENERIERTEN ÜBERSETZUNGEN UND/ODER SPEZIFIKATIONEN EINES PROGRAMMCODES**

(71) Anmelder: Robert Bosch GmbH, 70442 Stuttgart (DE)
(72) Erfinder: Quante, Jochen, 71640 Ludwigsburg (DE); Woehrle, Matthias, 74321 Bietigheim-Bissingen (DE); Hecking-Harbusch, Jesko, 71229 Leonberg (DE)

(57) **Zusammenfassung**

Ein erster Aspekt der vorliegenden Offenbarung betrifft ein Verfahren zum Bewerten von automatisiert generierten Übersetzungen und/oder Spezifikationen eines Programmcodes. Das Verfahren umfasst Erhalten einer automatisiert generierten Übersetzung eines Ursprungs-Programmcodes aus einer Ursprungssprache in eine Zielsprache und/oder einer automatisiert generierten Spezifikation eines Ursprungs-Programmcodes und Erhalten des Ursprungs-Programmcodes. Das Verfahren umfasst weiter Erzeugen eines reproduzierten Programmcodes aus der erhaltenen Übersetzung und/oder der erhaltenen Spezifikation unter Verwendung eines ersten generativen Maschinenlern-Systems. Das generative Maschinenlern-System ist dazu ausgelegt ist, eine Übersetzung eines Programmcodes von der Zielsprache in die Ursprungssprache zu erzeugen. Zusätzlich oder alternativ ist das generative Maschinenlern-Systemdazu ausgelegt, aus einer Spezifikation eines Programmcodes den dazugehörigen Programmcode zu erzeugen. Das Verfahren umfasst weiterhin Bestimmen einer Äquivalenz des Ursprungsprogrammcodes und des reproduzierten Programmcodes, um die automatisiert generierte Übersetzung und/oder Spezifikation des Ursprungs-Programmcodes zu bewerten.

## Beschreibung

### Hintergrund

Die automatische Erzeugung und Bearbeitung von Programm-Code nehmen eine zentrale Rolle ein zur beschleunigten und kostengünstigeren Entwicklung von Software-Komponenten (die den Programm-Code enthalten). Die Formen der automatischen Bearbeitung sind mannigfaltig. In manchen Beispielen kann ein Programm-Code automatisiert von einer Ursprungssprache in eine Zielsprache übersetzt werden. In anderen Beispielen kann eine Spezifikation für einen Programm-Code automatisiert erzeugt werden. In allen Fällen kommt es vor, dass das automatisiert erzeugte Produkt nicht korrekt ist. Beispielsweise kann eine Spezifikation den zugehörigen Programm-Code falsch oder unvollständig beschreiben. Daher wurden Techniken vorgeschlagen, um die Korrektheit der automatisiert erzeugten Produkte zu überprüfen.

Die Techniken der vorliegenden Offenbarung widmen sich diesem Thema.

### Zusammenfassung

Ein erster Aspekt der vorliegenden Offenbarung betrifft ein Verfahren zum Bewerten von automatisiert generierten Übersetzungen und/oder Spezifikationen eines Programmcodes. Das Verfahren umfasst Erhalten einer automatisiert generierten Übersetzung eines Ursprungs-Programmcodes aus einer Ursprungssprache in eine Zielsprache und/oder einer automatisiert generierten Spezifikation eines Ursprungs-Programmcodes und Erhalten des Ursprungs-Programmcodes. Das Verfahren umfasst weiter Erzeugen eines reproduzierten Programmcodes aus der erhaltenen Übersetzung und/oder der erhaltenen Spezifikation unter Verwendung eines ersten generativen Maschinenlern-Systems. Das generative Maschinenlern-System ist dazu ausgelegt, eine Übersetzung eines Programmcodes von der Zielsprache in die Ursprungssprache zu erzeugen. Zusätzlich oder alternativ ist das generative Maschinenlern-System dazu ausgelegt, aus einer Spezifikation eines Programmcodes den dazugehörigen Programmcode zu erzeugen. Das Verfahren umfasst weiterhin Bestimmen einer Äquivalenz des Ursprungsprogrammcodes und des reproduzierten Programmcodes, um die automatisiert generierte Übersetzung und/oder Spezifikation des Ursprungs-Programmcodes zu bewerten.

Ein zweiter Aspekt der vorliegenden Offenbarung betrifft eine Umgebung (z.B. eine Entwicklungs- und/oder Testumgebung für Programmcode), die dazu ausgelegt ist, das Verfahren gemäß dem ersten allgemeinen Aspekt auszuführen.

Ein dritter Aspekt der vorliegenden Offenbarung betrifft ein Programm, der Befehle enthält, die, wenn sie in einer Recheneinheit ausgeführt werden, die Recheneinheit dazu veranlassen, die Schritte des Verfahrens gemäß dem ersten allgemeinen Aspekt auszuführen.

Die Techniken gemäß der ersten bis dritten allgemeinen Aspekte können in manchen Implementierungen einen oder mehrere der folgenden Vorteile zeigen.

Erstens kann mittels der Techniken der vorliegenden Offenbarung sichergestellt werden, dass eine erzeugte Spezifikation den Ursprungs-Programmcode in seiner Essenz richtig beschreibt (dass salopp gesagt die Spezifikation zu dem Ursprungs-Programmcode passt). Indem gemäß der vorliegenden Offenbarung Programm-Code mit Programm-Code verglichen wird, kann eine Aussage bezüglich der Korrektheit der Spezifikation belastbarer sein als bei manchen Techniken des Stands der Technik (da hier bspw. der Ursprungs-Programmcode mit der erzeugten Spezifikation verglichen wird). Gleiches gilt für Übersetzungen des Ursprungs-Programmcodes in Zielsprachen.

Zweitens können die Techniken der vorliegenden Offenbarung in manchen Fällen weitgehend oder manchmal sogar vollständig automatisiert werden.

Drittens kann eine Bestimmung der Äquivalenz durch eine Verwendung eines reproduzierten Programmcodes vereinfacht werden im Vergleich zu Verfahren, in denen der Ursprungs-Programmcode mit dem übersetzten Programmcode bzw. der Ursprungs-Programmcode mit einer dafür erstellten Spezifikation verglichen wird. Manche formalisierten Prüfungsverfahren sind schwierig oder sogar gar nicht einsetzbar, wenn bspw. die Spezifikation in einer natürlichen Sprache abgefasst ist (was gewöhnlich der Fall ist). Aber auch ein formalisierter Vergleich zweier Programmcodes in unterschiedlichen Programmiersprachen kann schwieriger sein, als ein formalisierter Vergleich zweier Programmcodes in derselben Programmiersprache (z.B. kann es notwendig sein, syntaktische Unterschiede der beiden Programmiersprachen zu berücksichtigen).

Viertens können die Ergebnisse der Äquivalenzprüfung zur Anpassung der Spezifikation oder des übersetzten Programmcodes verwendet werden. Damit können Fehler oder Ungenauigkeiten beim Erzeugen der Spezifikation oder der Übersetzung in manchen Fällen behoben werden.

Einige Begriffe werden in der vorliegenden Offenbarung in folgender Weise verwendet.

Eine "Spezifikation" kann jede Beschreibung der Anforderungen, des Designs, des Verhaltens und/oder der Umgebung des Programmcodes sein. Eine Spezifikation kann eine Vorlage für Entwickler, Tester und Nutzer des Programmcodes sein. In manchen Beispielen kann die Spezifikation eine Design-Spezifikation oder eine technische Spezifikation sein. Eine Spezifikation kann einem oder mehreren Standards (Industriestandards) entsprechend aufgebaut sein.

Ein "Maschinenlern-System" ist jedwedes System, in dem ein mittels maschinellen Lernens erzeugtes (d.h. trainiertes) Modell enthalten ist. Die Modelle und damit die Maschinenlern-Systeme der vorliegenden Offenbarung sind ausgelegt zum Erzeugen von Spezifikation von Ursprungs-Programmcode oder zum Übersetzen von Ursprungs-Programmcode (der z.B. in einer ersten Programmiersprache abgefasst ist) in einen übersetzten Programmcode (der z.B. in einer zweiten Programmiersprache abgefasst ist), oder zum Erzeugen eines rekonstruierten Programmcodes aus einer Spezifikation oder einem übersetzten Programmcode. In manchen Beispielen ist ein Maschinenlern-System für mehrere oder alle der vorangehenden Aufgaben ausgelegt. Die Modelle können explizit und/oder ausschließlich zu diesem Zweck trainiert sein. In anderen Beispielen können die Modelle multi-modale Modelle umfassen, die auch für andere Aufgaben trainiert sind. Insbesondere können die Modelle Sprachmodelle sein oder umfassen. Die Modelle können (aber müssen nicht) künstliche neuronale Netze umfassen (insbesondere tiefe künstliche neuronale Netze).

Das Maschinenlern-System kann ein generatives Maschinenlernmodell, bspw. ein generatives Foundation-Modell, umfassen. In manchen Beispielen kann das generative Maschinenlernmodell ein Modell zur Spracherzeugung umfassen. Zum Beispiel kann das generative Maschinenlernmodell ein Sprachmodell umfassen.

Ein "Sprachmodell" kann jedes generative Modell sein, dass mittels Techniken des maschinellen Lernens trainiert wurde zum Erzeugen von Sprache. Ein Sprachmodell kann insbesondere ein Large Language Model (LLM) sein oder ein anderes Transformer-Modell oder ein Codemodell als ein auf Programmcode spezialisiertes Sprachmodell oder auch ein allgemeines Sprachmodell, das auch Programmcode erzeugen kann. Weiterhin umfasst sind Computersprachen, Programmcodes einer Recheneinheit wie einem Computer. Die Sprache des Modells kann nicht nur natürliche Sprachen, sondern auch künstliche Sprachen wie zum Beispiel Programmiersprachen beinhalten.

Zum Beispiel kann das Sprachmodell eines oder mehrere umfassen von CodeLlama, Llama, Mistral 7B, Ollama, CoPilot und/oder Sprachmodelle aus der GPT-Familie (zum Beispiel ChatGPT). In anderen Beispielen können Multi-modale Modelle wie beispielsweise Gemini, GPT4o eingesetzt werden.

Als "Programmcode" oder auch "Code" werden jedwede Anweisungen bezeichnet, die im Rahmen der Softwareentwicklung für eine bestimmtes Software-Komponente und/oder Hardware-Komponente oder einen Teil davon entstehen und die deren Funktionalität in einer bestimmten Programmiersprache beschreiben bzw. repräsentieren. Die vorliegende Offenbarung bezeichnet verschiedene Entwicklungsstufen und Implementierungsstufen einheitlich mit dem Begriff Programmcode, auch wenn sich die Natur dessen ändert (z.B. zu einer kompilierten Form bei der Implementierung). Programmcode kann (und wird) im Laufe des Entwicklungsprozesses verschiedene Formen annehmen. Die vorliegende Beschreibung spricht generell von demselben Programmcode, auch wenn sich seine Form ändert (z.B. nach einer Kompilierung in maschinenlesbaren Programmcode).

Ein "System" oder "technisches System" der vorliegenden Offenbarung kann jedwede technische Vorrichtung sein, die zur Lösung einer konkreten technischen Aufgabe ausgelegt ist. Ein System kann Software- und oder Hardware-Komponenten umfassen, die dessen Funktionalität festlegen (oder aus einer oder mehrerer dieser Komponenten bestehen oder basieren). Ein System kann eine Recheneinheit umfassen oder zur Ausführung auf einer Recheneinheit ausgelegt sein. Zum Beispiel kann ein System eine Recheneinheit (z.B. eine Steuereinheit oder ein Steuergerät) sein. Weitere konkrete Beispiele werden unten genannt.

Das Bestimmen der Äquivalenz eines Ursprungs-Programmcodes und eines rekonstruierten Programmcodes kann eines oder mehrere umfassen von: eine formale Prüfung der Äquivalenz des Verhaltens des Ursprungs-Programmcodes und des rekonstruierten Programmcodes. Zum Beispiel kann diese Prüfung der Äquivalenz eines oder mehrere umfassen von: Model Checking (z.B. Bounded Model Checking), Tests in der Ursprungssprache, Test auf Contracts in der Ursprungssprache und/oder syntaktischen und stilistischen Tests, Fuzzing, Mutation der Eingänge eines Test-Harness, Ableitung aus Contracts der Ursprungssprache und/oder Ableitung aus einem Sprachmodell. In jedem Fall wird geprüft, ob gleiche (konkrete oder abstrakte) Eingaben für beide Codes zu gleichen Ausgaben und evtl. Seiteneffekten führen.

Ein "Test-Harness" bzw. Testrahmen umfasst eine Sammlung von Software-Komponenten und Testdaten, die zum systematischen automatisierten Testen eines Programmcodes unter verschiedenen Umgebungsbedingungen verwendet wird. Ein Test-Harness umfasst üblicherweise eine Testausführungs-Engine, welche für die Abarbeitung einer Testlogik verantwortlich ist, und eine Test-Datenbank, welche Testskripte, Testprogramme und/oder sonstige Testressourcen beinhalten kann. Der Test-Harness kann automatisiert erzeugt werden. Der Start des Tests kann mit gegebenen oder vorgefertigten Tests aus der Test-Datenbank durchgeführt werden. Tests können zudem automatisch generiert werden. Daten können hier Programm-Code inklusive Test-Fälle und - Harnesses plus zusätzlichen (natürlich-sprachlichen) Beschreibungen von der Funktionsweise bzw. Gültigkeitsbereichen sein.

"Fuzzing" oder "Fuzz-Testing" ist der automatisierte Prozess des Sendens von zufällig generierten Eingaben von einem Fuzzer an ein Ziel oder Zielprogramm (die verschiedenen Programm-Codes in der vorliegenden Offenbarung) und des Beobachtens der Reaktion bzw. des Verhaltens des Ziels.

Ein "Fuzzer" oder "Fuzzing-Engine" ist ein System, das automatisch Eingaben generiert. Die Eingaben sind also nicht zwingend mit dem zu testenden Programm-Code verbunden, und es muss auch keine Instrumentierung durchgeführt werden. Fuzzer haben jedoch die Fähigkeit, Programmcode zu instrumentieren, Testfälle zu erzeugen und zu testende Programme auszuführen. Bekannte Beispiele für Fuzzer sind afl und libfuzzer.

Ein "Testfall" ist eine bestimmte Eingabe und ein bestimmter Testdurchlauf aus einem Test Harness oder einem Fuzz-Test. Um die Reproduzierbarkeit zu gewährleisten, werden interessante Durchläufe (Finden neuer Codepfade oder Abstürze) gespeichert.

### Kurzbeschreibung der Figuren

**Fig.** 1 enthält ein Flussdiagramm verschiedener Verfahren gemäß der vorliegenden Offenbarung.
**Fig.** 2 zeigt schematisch eine Umgebung, in der die Verfahren gemäß der vorliegenden Offenbarung ausgeführt werden können.

### Detaillierte Beschreibung

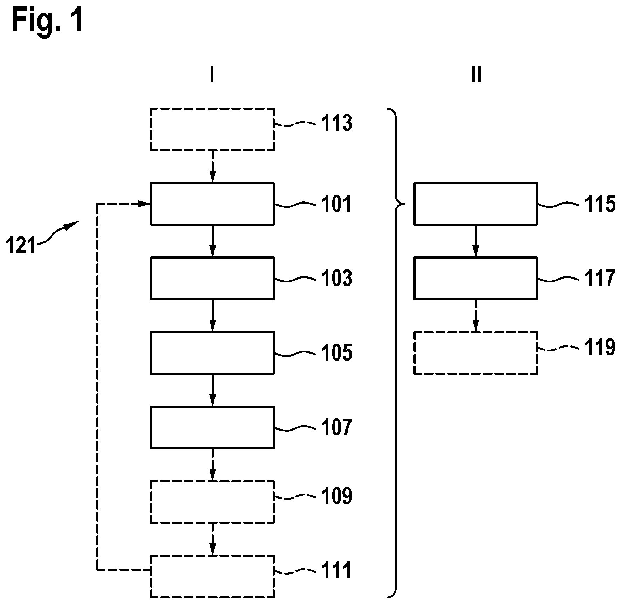

**Fig.** 1 zeigt ein Flussdiagramm verschiedener Verfahren gemäß der vorliegenden Offenbarung. In der linken Spalte (I) ist ein Verfahren zum Bewerten von automatisiert generierten Übersetzungen und/oder Spezifikationen eines Programmcodes gezeigt. In manchen Beispielen kann das Verfahren nur das Bewerten von automatisiert generierten Übersetzungen umfassen. In anderen Beispielen umfasst das Verfahren nur das Bewerten von automatisiert generierten Spezifikationen. In wieder anderen Beispielen kann das Verfahren das Bewerten von sowohl einer automatisiert generierten Übersetzung als auch einer automatisiert generierten Spezifikation zu einem Ursprungs-Programmcode umfassen. Im Weiteren werden Beispiele teilweise nur anhand eines Verfahrens zum Bewerten von automatisiert generierten Spezifikationen und in anderen Beispielen anhand Verfahren zum Bewerten von automatisiert generierten Übersetzungen erläutert. In diesen Fällen sind die dort beschriebenen Aspekte jeweils auch auf den anderen Typ der Bewertung übertragbar (es sei denn es handelt sich um Aspekte, die dem Bewerten von Spezifikationen oder Übersetzungen eigen ist).

Das Verfahren umfasst Erhalten 101 einer automatisiert generierten Übersetzung eines Ursprungs-Programmcodes aus einer Ursprungssprache in eine Zielsprache und/oder einer automatisiert generierten Spezifikation eines Ursprungs-Programmcodes. Die Übersetzung bzw. die Spezifikation kann in jeder erdenklichen digitalen Form vorliegen (z.B. als eine oder mehrere Textdateien). Der Schritt des Erhaltens kann Zugreifen auf einen Speicher oder empfangen von Dateien umfassen.

Das Verfahren umfasst weiterhin Erhalten 103 des Ursprungs-Programmcodes. Der Ursprungs-Programmcode kann in jeder geeigneten Form oder Darstellung vorliegen (z.B. als Quellcode).

Das Verfahren umfasst weiterhin Erzeugen 105 eines reproduzierten Programmcodes aus der erhaltenen Übersetzung und/oder der erhaltenen Spezifikation unter Verwendung eines ersten generativen Maschinenlern-Systems. Das generative Maschinenlern-System ist dazu ausgelegt, eine Übersetzung eines Programmcodes von der Zielsprache in die Ursprungssprache zu erzeugen und/oder ist dazu ausgelegt ist, aus einer Spezifikation eines Programmcodes den dazugehörigen Programmcode zu erzeugen. Wie schon erwähnt kann das generative Maschinenlern-System nur zum Erzeugen des reproduzierten Programmcodes aus der erhaltenen Übersetzung oder nur zum Erzeugen des reproduzierten Programmcodes aus der erhaltenen Spezifikation ausgelegt sein.

In manchen Beispielen umfasst das Maschinenlern-System ein generatives Maschinenlernmodell, das bspw. ein Modell zur Spracherzeugung umfasst. Zum Beispiel kann das generative Maschinenlernmodell ein Sprachmodell umfassen (zum Beispiel ein Large-Language-Modell). Einige der folgenden Beispiele betreffen ein Maschinenlern-System, das ein Large-Language-Modell umfasst. Die Techniken der vorliegenden Offenbarung können sich aber auch jedem anderen geeigneten Modell bedienen, um den reproduzierten Programmcode aus der Übersetzung oder der Spezifikation zu erzeugen (z.B. eines der weiter oben genannten Modelle).

Das Verfahren umfasst weiterhin Bestimmen 107 einer Äquivalenz des Ursprungsprogrammcodes und des reproduzierten Programmcodes, um die automatisiert generierte Übersetzung und/oder Spezifikation des Ursprungs-Programmcodes zu bewerten.

In manchen Beispielen kann das Bestimmen der Äquivalenz Durchführen eines automatisierten Software-Testverfahrens umfassen. So kann das automatisierte Software-Testverfahren eine formale Prüfung der Äquivalenz des Verhaltens des Ursprungs-Programmcodes und des rekonstruierten Programmcodes umfassen. Zum Beispiel kann das automatisierte Software-Testverfahren eines oder mehrere umfassen von Model Checking (z.B. Bounded Model Checking), Tests in der Ursprungssprache, Test auf Contracts in der Ursprungssprache und/oder syntaktischen und stilistischen Tests, Fuzzing, Mutation der Eingänge eines Test-Harness, Ableitung aus Contracts der Ursprungssprache und/oder Ableitung aus einem Sprachmodell. In manchen Beispielen kann das Bestimmen der Äquivalenz Verwendung eines Test-Harness umfassen.

In manchen Beispielen kann eine zu bestimmende Äquivalenz eine semantische Äquivalenz des Ursprungs-Programmcodes und des reproduzierten Programmcodes sein. Unter semantischer Äquivalenz kann verstanden werden, dass die beiden Codes dieselbe Funktion implementieren und/oder dasselbe Verhalten zeigen (d.h. bei gleichen Eingaben die gleichen Ausgaben und evtl. Seiteneffekte liefern). Semantisch äquivalente Programmcodes können syntaktisch oder auch in ihrer Implementierung unterschiedlich sein.

Zusätzlich oder alternativ kann eine zu bestimmende Äquivalenz auch Aspekte der Syntax und/oder der Implementierung berücksichtigen.

In manchen Beispielen kann die zu bestimmende Äquivalenz nichtfunktionale Eigenschaften unberücksichtigt lassen. Nichtfunktionale Eigenschaften können beispielsweise Laufzeiteigenschaften der Implementierung sein (z.B. Latenz, Speicherbedarf, benötigte Performanz oder andere Laufzeiteigenschaften). In alternativen Beispielen kann die zu bestimmende Äquivalenz auch nichtfunktionale Eigenschaften berücksichtigen.

Manche Beispiele können umfassen Empfang einer Definition eines zu verwendenden Äquivalenzmaßes (bspw. über eine Benutzerschnittstelle). In manchen Beispielen können für verschiedene Durchläufe der Verfahren zum Bewerten von automatisiert generierten Übersetzungen und/oder Spezifikationen eines Programmcodes verschieden definierte Äquivalenzmaße benutzt werden (bspw. ein strengeres Äquivalenzmaß in einem ersten Durchlauf und ein weniger strenges in einem zweiten Durchlauf, bspw. nachdem in einem ersten Durchlauf keine Äquivalenz festgestellt wurde, zum Beispiel ein Äquivalenzmaß, das auch auf nichtfunktionale Eigenschaften abstellt in einem ersten Durchlauf und ein Äquivalenzmaß, dass nicht oder weniger stark auf nichtfunktionale Eigenschaften, sondern nur auf semantische Äquivalenz abstellt in einem zweiten Durchlauf).

Anhand der Ergebnisse des Bestimmens der Äquivalenz kann die automatisiert generierte Übersetzung und/oder Spezifikation des Ursprungs-Programmcodes bewertet werden. Die Bewertung kann in manchen Beispielen eine diskrete Bewertung in zwei oder mehr Stufen umfassen (z.B. eine erste Stufe, die eine ausreichende Äquivalenz testiert und eine zweite Stufe, die eine nicht ausreichende Äquivalenz testiert). Alternativ kann die Bewertung auf einer kontinuierlichen Skala erfolgen (z.B. in Form eines kontinuierlichen Äquivalenzmaßes).

In manchen Beispielen kann das Bestimmen der Äquivalenz Erzeugen 109 von Beschreibungen umfassen, warum eine Äquivalenzprüfung fehlgeschlagen ist. Zusätzlich oder alternativ kann das Bestimmen Ausgeben von Beispielen von Testdaten umfassen, für die eine Äquivalenzprüfung fehlgeschlagen ist.

In manchen Beispielen können die Verfahren der vorliegenden Offenbarung weiter umfassen bereitstellen von Informationen, die ein Modul zur automatisierten Übersetzung und/oder zur automatisierten Erzeugung von Spezifikationen verwenden kann (bspw. das weiter unten beschriebene zweite generative Maschinenlern-System), um Fehler zu beheben, die zu einem Fehlschlagen der Äquivalenzprüfung geführt haben. Bspw. kann bereitstellen von Informationen hinzufügen der Informationen in einen Prompt an ein (zweites) generatives Maschinenlern-System enthalten.

Weiter zusätzlich kann das Verfahren umfassen Anpassen 111 der Übersetzung und/oder der Spezifikation des Ursprungs-Programmcodes unter Verwendung der Beschreibungen, warum eine Äquivalenzprüfung fehlgeschlagen ist zum Erzeugen eines angepassten Ursprungs-Programmcodes (z.B. eine oder mehrere Gründe für den Fehlschlag). Weiter zusätzlich oder alternativ kann das Verfahren umfassen Anpassen 111 der Übersetzung und/oder der Spezifikation des Ursprungs-Programmcodes unter Verwendung der Beispiele von Testdaten, für die eine Äquivalenzprüfung fehlgeschlagen ist zum Erzeugen eines angepassten Ursprungs-Programmcodes. Beispielsweise können die Testdaten Testfälle aus der automatisierten Testung umfassen. Weiter zusätzlich oder alternativ kann das Verfahren umfassen Anpassen 111 der Übersetzung und/oder der Spezifikation des Ursprungs-Programmcodes unter Verwendung der bereitgestellten Informationen, die ein Modul zur automatisierten Übersetzung und/oder zur automatisierten Erzeugung von Spezifikationen verwenden kann (bspw. das weiter unten beschriebene zweite generative Maschinenlern-System), um Fehler zu beheben, die zu einem Fehlschlagen der Äquivalenzprüfung geführt haben, umfassen (z.B. durch eine entsprechende Aufnahme in einen Prompt für das zweite generative Maschinenlern-System).

In manchen Beispielen umfasst das Verfahren weiter Übersetzen 113 des Ursprungs-Programmcodes aus der Ursprungssprache in die Zielsprache, um die automatisiert generierte Übersetzung zu erhalten.

Zusätzlich oder alternativ kann das Verfahren umfassen Erzeugen 113 der automatisiert generierten Spezifikationen des Ursprungs-Programmcodes.

In manchen Beispielen geschieht das Übersetzen und/oder Erzeugen unter Verwendung eines zweiten Maschinenlernsystems. Das zweite Maschinenlern-System kann so ausgestaltet sein wir weiter oben für das erste Maschinenlern-System beschrieben. Zum Beispiel können das erste und das zweite Maschinenlern-System in einem einzigen Maschinenlern-System implementiert sein.

In anderen Beispielen kann das Übersetzen und/oder Erzeugen der Spezifikation unter Verwendung anderer Techniken als Techniken des maschinellen Lernens geschehen.

In manchen Beispielen kann das Anpassen eine Eingabe an ein zweites Maschinenlern-System zur Erzeugung einer angepassten Übersetzung oder eine angepasste Spezifikation aus dem Ursprungs-Programmcode umfassen (bspw. kann ein Prompt für ein Large-Language-Modell in dem zweiten Maschinenlern-System abgeändert oder ergänzt werden, bspw. kann der Prompt Anweisungen enthalten, in besonderem Maße auf die Gründe oder die Beispiele Rücksicht zu nehmen bei der Erzeugung der Übersetzung und/oder der Spezifikation). Die angepasste Übersetzung bzw. die angepasste Spezifikation kann in manchen Beispielen mittels desselben zweiten Maschinenlern-Systems erzeugt werden, dass für die Erzeugung der ersten Übersetzung bzw. der ersten Spezifikation verwendet wird.

In manchen Beispielen kann die angepasste Übersetzung oder die angepasste Spezifikation dann zur weiteren Verwendung abgelegt werden (z.B. die weitere Verwendung in einem Entwicklungsprozess wie unten beschrieben). Zusätzlich oder alternativ kann die angepasste Übersetzung oder die angepasste Spezifikation erneut mittels der Verfahren der vorliegenden Offenbarung bewertet werden (Fig. 1 zeigt eine mögliche Rückführung 121 der angepassten Übersetzung bzw. der angepassten Spezifikation). In manchen Beispielen kann die angepasste Übersetzung oder die angepasste Spezifikation mehrfach angepasst und dann mittels der Verfahren der vorliegenden Offenbarung bewertet werden (z.B. im Rahmen eines iterativen Prozesses, um die Äquivalenz der Übersetzung bzw. die Qualität der Spezifikation schrittweise zu verbessern; der iterative Prozess kann abgebrochen werden, wenn die Bestimmung der Äquivalenz des Ursprungs-Programmcodes und des reproduzierten Programmcodes ein bestimmtes Äquivalenzkriterium erfüllt).

Im Folgenden werden die Techniken der vorliegenden Offenbarung an einem konkreten Beispiel erläutert. In diesem Beispiel wird eine Spezifikation eines Ursprungs-Programmcode erzeugt und bewertet. Die verschiedenen Schritte werden in dem Beispiel mittels des GitHub-CoPilot ausgeführt.

Der Ursprungs-Programmcode sieht in dem Beispiel wie folgt aus:

```
 #include <stdbool.h>
 #include <stdio.h>
  
 // Heater interface
 bool status();
 void switchOn();
 void setTemp(int temperature);
 void switchOff();
  
 // Timer interface
 void setTimer(int time_in_ms);
 bool timerExpired();
  
 // Heater controller function
 bool heater_controller_impl1 (bool switch_on, int temperature) {
 static bool heater_is_on = false;
  
 if (switch_on) {
         if (heater_is_on) {
                 setTemp(temperature);
                 return true;
         } else {
        if (status()) {
               switchOn();
               setTemp(temperature);
               heater_is_on = true;
               return true;
        } else {
               return false;
        }
 }
 } else {
        if (heater_is_on) {
                setTemp(0);
                setTimer(500);
                while (!timerExpired()) {
               // Wait for timer to expire
                }
                switchOff();
                heater_is_on = false;
                return true;
        } else {
                return false;
                }
        }
 }
```

Für diesen Ursprungs-Programmcode wird nun eine Spezifikation mittels des GitHub-CoPilot erzeugt. Dazu kann ein geeigneter Prompt verwendet werden.

Ein möglicher Prompt für diesen Zweck lautet wie folgt (in der Englischen Originalsprache wiedergegeben):
"Please provide a detailed software design specification for the following c function.
Do not refer to implementation details except the function interface. Everything else should be specified by natural language, in a level of detail that clearly determines required functional behavior, but leaves room for implementation details."

Der GitHub-CoPilot verwendet zu dem Erzeugen der Spezifikation ein Maschinenlern-System, das ein Large-Language-Modell umfasst.

In einem Beispiel wird die folgende Spezifikation für den Ursprungs-Programmcode erzeugt:

```
## Software Design Specification for 'heater_controller_impl1'
 ### Function Interface
 ‴c
 bool heater_controller_impl1 (bool switch_on, int temperature);
 ### Purpose
 
```

The 'heater_controller_impl1' function is designed to control the operation of a heater based on the input parameters. It manages the heater's power state and temperature settings, ensuring that the heater operates correctly according to the specified conditions.
### Parameters
   - 'switch_on' (bool): A boolean value indicating whether the heater should be turned on ('true') or off ('false').
   - 'temperature' (int): An integer value representing the desired temperature to be set when the heater is turned on.
### Return Value
   - The function returns a boolean value:
   - 'true' if the operation (turning the heater on or off) was successful.
   - 'false' if the operation failed.
### Functional Behavior
   1. **Initialization**:
      - The function maintains an internal state to track whether the heater is currently on or off.
   2. **Turning the Heater On**:
      - If 'switch_on' is 'true':
         - If the heater is already on:
            - The function sets the heater to the specified 'temperature'.
            - The function returns 'true' to indicate success.
         - If the heater is off:
            - The function checks the current status of the heater.
               - If the heater is ready to be turned on:
                  - The function turns the heater on.
                  - The function sets the heater to the specified 'temperature'.
                  - The internal state is updated to indicate that the heater is now on.
                  - The function returns 'true' to indicate success.
               - If the heater is not ready to be turned on:
                  - The function returns 'false' to indicate failure.
   3. **Turning the Heater Off**:
      - If 'switch_on' is 'false':
         - If the heater is currently on:
            - The function sets the heater temperature to '0'.
            - The function sets a timer for a specified duration (e.g., 500 milliseconds).
            - The function waits for the timer to expire.
            - Once the timer expires, the function turns the heater off.
            - The internal state is updated to indicate that the heater is now off.
            - The function returns 'true' to indicate success.
         - If the heater is already off:
            - The function returns 'false' to indicate failure.
### Constraints and Assumptions
   - The function assumes that the heater interface functions ('status', switchOn', 'setTemp', 'switchOff') and the timer interface functions ('setTimer', 'timerExpired') are correctly implemented and available.
   - The function assumes that the heater can be turned on or off instantaneously and that setting the temperature is an immediate operation.
   - The function assumes that the timer mechanism is reliable and
      accurately measures the specified duration.
      ### Error Handling
         - The function handles the case where the heater is not ready to be turned on by returning 'false'.
         - The function handles the case where the heater is already in the desired state (on or off) by returning 'false'.
      ### Performance Considerations
         - The function includes a waiting loop for the timer to expire when turning the heater off, which may block execution for the duration of the timer. This should be considered in the context of the overall system performance.
      ### Safety and Reliability
         - The function ensures that the heater is only turned on or off when it is safe to do so, based on the current status of the heater.
         - The function ensures that the heater is set to a safe temperature (0) before turning it off, to prevent any potential overheating issues.

Entsprechend den Techniken der vorliegenden Offenbarung wird ein rekonstruierter Programm-Code aus der Spezifikation erzeugt (wiederum mittels des GitHub-CoPilot). Dazu kann ein weiterer geeigneter Prompt für das Maschinenlern-System verwendet werden.

Ein geeigneter Prompt lautet:
"Given the following detailed design specification, generate an implementation considering the interface specification. Work carefully and think step by step. First consider doing an outline which things the implementation needs to accomplish. Subsequently use this outline to generate the implementation and add the outline steps as comments to the code. Check consistency between these comments and the code so that we can be sure that the implementation is correct, contains all necessary functionality, but nothing additional."

Neben der oben gezeigten Spezifikation wird zusätzlich die Schnittstelle beschrieben, wie sie im Code zu finden ist (z.B. Variablennamen, Typen, Funktionsnamen, usw.). Diese kann mittels Software-Analyse automatisch extrahiert werden.

Das Maschinenlern-System erzeugt in einem Beispiel den folgenden rekonstruierten Programm-Code:

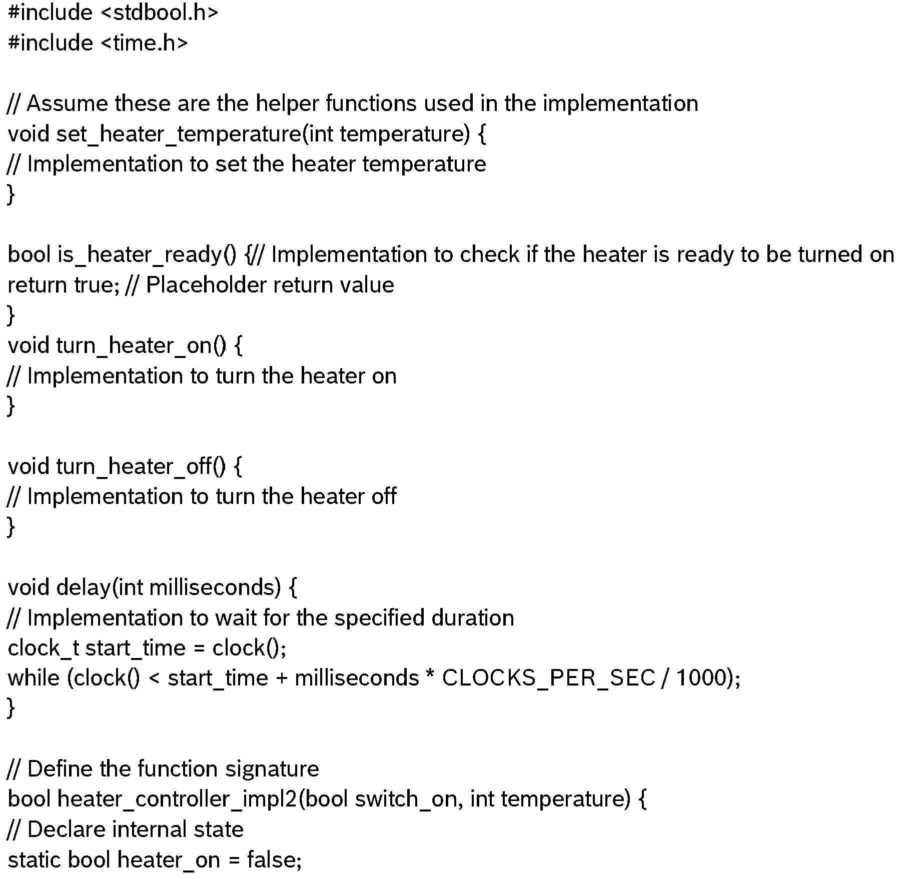

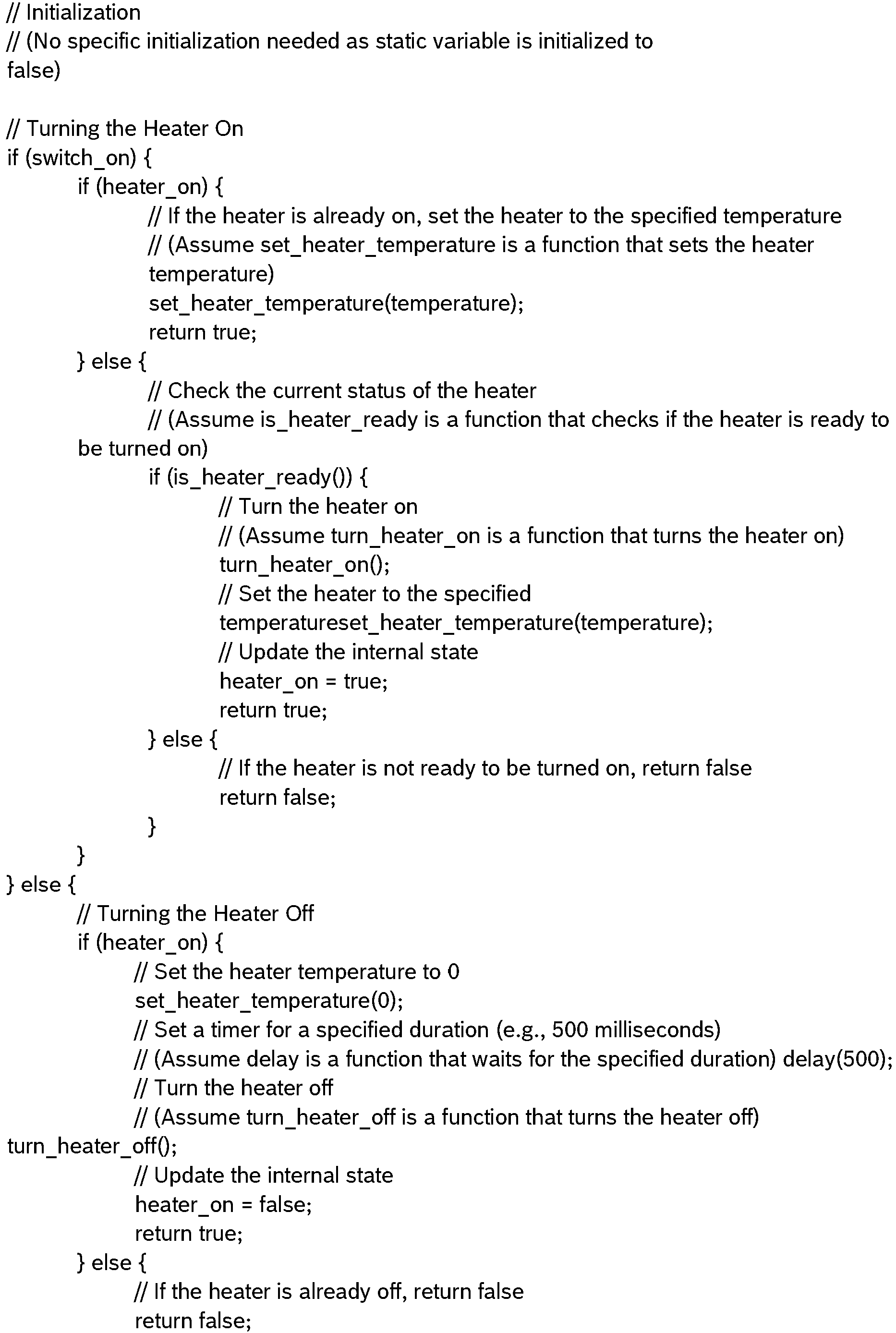

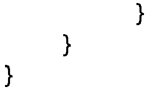

Zu der Überprüfung der Äquivalenz des Ursprungs-Programmcodes und des rekonstruierten Programmcodes wird ein Test-Harness verwendet.

Ein Beispiel eines Test Harness lautet wie folgt:

```
 #include <stdbool.h>
 #include <stdio.h>
  
 // Declarations of the two implementations
 bool heater_controller_impl1 (bool switch_on, int temperature);
 bool heater_controller_impl2(bool switch_on, int temperature);
  
 // Mock implementations of the helper functions used in both implementations
 /*void set_heater_temperature(int temperature) {
 // Mock implementation
 }bool is_heater_ready() {
  
 // Mock implementation
 return true;
 }
  
 void turn_heater_on() {
 // Mock implementation
 }
  
 void turn_heater_off() {
 // Mock implementation
 }
 void delay(int milliseconds) {
 // Mock implementation
 }*/
 bool status() {
 // Mock implementation
 return true;
 }
  
 void switchOn() {
 // Mock implementation
 }
  
 void setTemp(int temperature) {
 // Mock implementation
 }
  
 void switchOff() {
 // Mock implementation
 }
  
 void setTimer(int time_in_ms) {
 // Mock implementation
 }
  
 bool timerExpired() {
 // Mock implementation
 return true;
 }
 // Test function to compare the outputs of the two implementations
 void test_heater_controller() {
        bool result1, result2;
        bool switch_on;
        int temperature;
  
        // Test case 1
        switch_on = true;
        temperature = 25;
        result1 = heater_controller_impl1 (switch_on, temperature);
        result2 = heater_controller_impl2(switch_on, temperature);
        printf("Test case 1: %s\n", (result1 == result2) ? "PASS" : "FAIL");
  
        // Test case 2
        switch_on = false;
        temperature = 0;
        result1 = heater_controller_impl1 (switch_on, temperature);
        result2 = heater_controller_impl2(switch_on, temperature);
        printf("Test case 2: %s\n", (result1 == result2) ? "PASS" : "FAIL");
  
 // Add more test cases as needed
 }
  
 int main() {
        test_heater_controller();
        return 0;
 }
```

Je nach Ergebnis der Test-Fälle des Test-Harnesses kann eine Äquivalenz des Ursprungs-Programmcodes und des rekonstruierten Programmcodes festgestellt werden oder aber festgestellt werden, dass der Ursprungs-Programmcode und der rekonstruierte Programmcode nicht äquivalent sind (weil sie bspw. für einen der Test-Fälle des Test-Harnesses unterschiedliche Ergebnisse geliefert haben).

In manchen Beispielen können die Verfahren der vorliegenden Offenbarung oder Teile davon automatisiert ausgeführt werden (z.B. ohne Eingaben menschlicher Nutzer als Eingaben zum Starten des Durchführens der Verfahren und/oder des Bestätigens, dass die Verfahren oder Teile davon ausgeführt werden sollen).

Die Verfahren der vorliegenden Offenbarung können im Allgemeinen im Rahmen eines Entwicklungsprozesses für Software(-Komponenten) durchgeführt werden.

Die vorliegende Offenbarung betrifft auch Verfahren zum Implementieren eines Programmcodes. In der rechten Spalte (II) der **Fig.** 1 ist ein Verfahren zum Implementieren eines Programmcodes gezeigt.

Das Verfahren umfasst Durchführen 115 einer der Verfahren zum Bewerten von automatisiert generierten Übersetzungen und/oder Spezifikationen eines Programmcodes gemäß der vorliegenden Offenbarung. Das Verfahren umfasst weiterhin Implementieren 117 des Programmcodes in einer Software-Komponente, nachdem das Bestimmen der Äquivalenz des Ursprungsprogrammcodes und des reproduzierten Programmcodes die Äquivalenz der Programmcodes ergeben hat.

Die Implementierung kann jeden Schritt umfassen, mit dem eine Software-Komponente in einem bestimmten (technischen) System oder einem Vorprodukt eines bestimmten (technischen) Systems eingebettet wird. Die Implementierung dabei je nach Art des bestimmten (technischen) Systems variieren. Zum Beispiel kann die Implementierung eine Herstellung einer Instanz des bestimmten Systems, ein Aufspielen einer Software, um eine Instanz des bestimmten Systems zu erzeugen oder ähnliche Implementierungsschritte beinhalten. Konkrete (technische) Systeme werden weiter unten beschrieben.

Die Techniken der vorliegenden Offenbarung können in jedem Stadium eines Produktlebenszyklus eines den Programmcode enthaltenden bestimmten (technischen) Systems durchgeführt werden. Die Verfahren der vorliegenden Offenbarung können in manchen Beispielen iterativ durchgeführt werden (d.h. die Verfahren werden mehrfach hintereinander ausgeführt).

Die vorliegende Offenbarung betrifft auch ein Verfahren des Verwendens 119 eines den Ursprungs-Programmcode enthaltenden bestimmten (technischen) Systems nach den Schritten der Techniken der vorliegenden Offenbarung.

In Beispielen kann das bestimmte (technische) System zur Regelung und/oder Steuerung und/oder Überwachung eines weiteren Systems ausgelegt sein. Der Ursprungs-Programmcode kann folglich ein Programmcode sein oder einen Teil davon zur Regelung und/oder Steuerung und/oder Überwachung eines weiteren Systems.

In Beispielen kann das Verfahren das Verwenden des bestimmten Systems zur Steuerung, Reglung und/oder Überwachung einer Fahrzeugfunktion, einer Roboterfunktion, einer Gebäudeautomatisierungsfunktion, Elektrowerkzeugautomatisierungsfunktion, einer Haushaltsgeräteautomatisierungsfunktion und/oder einer Funktion der industriellen Automatisierung umfassen. Das bestimmte System kann ein System zur Steuerung, Reglung und/oder Überwachung einer Fahrzeugfunktion, einer Roboterfunktion, einer Gebäudeautomatisierungsfunktion, Elektrowerkzeugautomatisierungsfunktion, einer Haushaltsgeräteautomatisierungsfunktion und/oder einer Funktion der industriellen Automatisierung sein. Der Ursprungs-Programmcode kann folglich ein Programmcode sein oder einen Teil davon zur Steuerung, Reglung und/oder Überwachung einer Fahrzeugfunktion, einer Roboterfunktion, einer Gebäudeautomatisierungsfunktion, Elektrowerkzeugautomatisierungsfunktion, einer Haushaltsgeräteautomatisierungsfunktion und/oder einer Funktion der industriellen Automatisierung.

In manchen Beispielen kann der Ursprungs-Programmcode ausgelegt sein, um Sensordaten zu Empfangen und zu Verarbeiten (bspw. für eine der oben oder unten beschriebenen Steuer-, Regelungs- und/oder Überwachungsaufgaben). Die Sensordaten können von jedem beliebigen Sensor erzeugt werden (z.B. Kameras, Ultraschallsensoren, LIDARs, RADAR-Sensoren, Sensoren zur Überwachung von translatorischen und/oder Drehbewegungen von Teilen eines Systems, Temperatursensoren, Sensoren zur Messung von elektrischen, magnetischen oder elektromagnetischen Felden und/oder weitere Sensoren). In manchen Beispielen kann der Programmcode ein Modell eines Systems und/oder seiner Umgebung erhalten, das dazu ausgelegt ist, Sensordaten zu empfangen.

In einem Beispiel kann das bestimmte System zur Anordnung in einem Fahrzeug ausgelegt sein, und/oder zur Steuerung einer Fahrzeugfunktion ausgelegt sein (insbesondere zur Steuerung einer Fahrfunktion). Der Ursprungs-Programmcode kann folglich ein Programmcode sein oder einen Teil davon zur Steuerung einer Fahrzeugfunktion (insbesondere zur Steuerung einer Fahrfunktion).

Zum Beispiel kann die Fahrzeugfunktion eine Funktion zum autonomen und/oder assistierten Fahren sein. In manchen Beispielen kann das bestimmte System und damit der Programmcode zur Ausführung auf einem Computersystem eines Fahrzeugs (bspw. eines autonom, hochautomatisiert oder assistiert fahrenden Fahrzeugs) ausgelegt sein. Zum Beispiel kann das Computersystem lokal in dem Fahrzeug implementiert sein oder (zumindest teilweise) in einem Backend, das mit dem Fahrzeug kommunikativ verbunden ist, implementiert sein. Beispielsweise kann das bestimmte System ein Steuergerät umfassen oder sein. In manchen Beispielen kann das Fahrzeug ein Computersystem mit einer Kommunikationsschnittstelle umfassen, die Kommunikation mit einem Backend ermöglicht. Beispielsweise kann in diesem Backend das bestimmte System ausgeführt werden. In einem Beispiel kann das bestimmte System ein System zur Querführung und/oder Längsführung des Fahrzeugs sein. In Beispielen kann das bestimmte System Geschwindigkeitsinformationen oder Distanzinformationen als Eingangsdaten empfangen. Alternativ oder zusätzlich können die Eingangsdaten eine relative Geschwindigkeit und/oder eine Distanz zwischen einem ersten Fahrzeug, einem zweiten Fahrzeug, einem Menschen und/oder einem ortsfesten Objekt umfassen. Alternativ oder zusätzlich können die Eingangsdaten Variablen umfassen, die mindestens auf einem von einem Lenkwinkel, einem Ausrichtungswinkel, einer Gierrate, einem Schlupfwinkel, und/oder einem seitlichen Fehler basieren. Alternativ oder zusätzlich können die Eingangsdaten Informationen aus einem Netzwerk umfassen, wie beispielsweise Bewegungs- und/oder Richtungsinformationen von anderen Fahrzeugen. In Beispielen können diese Informationen mittels Fahrzeug-zu-Fahrzeug-Kommunikation (V2V-Kommunikation) oder mittels eines Backends (V2X-Kommunikation) bereitgestellt werden. Alternativ oder zusätzlich können die Eingangsdaten eine Lenkgeschwindigkeit oder Sollvorgaben für Beschleunigungs- und/oder Bremsvorgänge umfassen.

In Beispielen kann das bestimmte System zur Anordnung in einer Antriebssteuerung oder eine Antriebseinheit ausgelegt sein und/oder zur Regelung einer motorbezogenen Funktion dienen (insbesondere zur Motorregelung). Der Ursprungs-Programmcode kann folglich ein Programmcode sein oder einen Teil davon zur Regelung einer motorbezogenen Funktion dienen (insbesondere zur Motorregelung). In Beispielen kann das bestimmte System zur Anordnung in einer Antriebsregelung einer elektrischen Maschine angeordnet sein.

Die vorliegende Offenbarung betrifft auch das Verwenden des bestimmten Systems zum Steuern und/oder Regeln und/oder Überwachen eines Roboters. Das bestimmte System kann ein System zur Steuerung, Reglung und/oder Überwachung eines Roboters (z.B. der Bewegung eines Roboters oder eines Teils davon). Der Ursprungs-Programmcode kann folglich ein Programmcode sein oder einen Teil davon zur Steuerung, Reglung und/oder Überwachung eines Roboters (oder eines Teils davon).

In anderen Beispielen kann das bestimmte System in einem Roboter angeordnet sein, und/oder zur Steuerung einer Roboterfunktion ausgelegt sein (insbesondere zur Steuerung einer Bewegungsfunktion eines Roboters). Zum Beispiel kann das bestimmte System ein System zur Querführung und/oder Längsführung des Roboters sein (und folglich der Programmcode die Querführung und/oder Längsführung des Roboters beschreiben). In manchen Beispielen kann das bestimmte System auf einem Computersystem eines Roboters ausgeführt werden. Zum Beispiel kann das Computersystem lokal in dem Roboter implementiert sein oder (zumindest teilweise) in einem Backend, das mit dem Roboter kommunikativ verbunden ist, implementiert sein. In manchen Beispielen kann das bestimmte System in einem Backend ausgeführt werden. In Beispielen kann das bestimmte System Geschwindigkeitsinformationen oder Distanzinformationen als Eingangsdaten erhalten. Alternativ oder zusätzlich können die Eingangsdaten eine relative Geschwindigkeit und/oder eine Distanz zwischen einem ersten Roboter, einem Menschen, einer weiteren mobilen Vorrichtung und/oder einem ortsfesten Objekt umfassen. Alternativ oder zusätzlich können die Eingangsdaten Variablen umfassen, die mindestens auf einem von einem Lenkwinkel, einem Ausrichtungswinkel, einer Gierrate, einem Schlupfwinkel, und/oder einem seitlichen Fehler basieren. Alternativ oder zusätzlich können die Eingangsdaten Informationen aus einem Netzwerk umfassen, wie beispielsweise Bewegungs- und/oder Richtungsinformationen von anderen Robotern, mobilen Vorrichtung und/oder Menschen. In Beispielen können diese Informationen mittels direkter Kommunikation oder mittels eines Backends bereitgestellt werden. In einem Beispiel kann ein Eingangsvektor eine Lenkgeschwindigkeit oder Sollvorgaben für Beschleunigungs- und/oder Bremsvorgänge umfassen.

Die vorliegende Offenbarung betrifft auch das Verwenden des bestimmten Systems zum Steuern und/oder Regeln und/oder Überwachen von Funktionen in der Gebäudeautomatisierung. Das bestimmte System kann ein System zur Steuerung, Reglung und/oder Überwachung von Funktionen in der Gebäudeautomatisierung (z.B. einer Klimatisierungsfunktion und/oder einer Beleuchtungsfunktion und/oder einer Sicherheitsfunktion). Der Ursprungs-Programmcode kann folglich ein Programmcode sein oder einen Teil davon zur Steuerung, Reglung und/oder Überwachung von Funktionen in der Gebäudeautomatisierung (z.B. einer Klimatisierungsfunktion und/oder einer Beleuchtungsfunktion).

In einem Beispiel kann das bestimmte System zur Anordnung in einem Gebäude ausgelegt sein und/oder zur Steuerung und/oder Regelung und/oder Überwachung von Gebäudefunktionen dienen (insbesondere zur Steuerung und/oder Regelung von Gebäudeautomatisierungsfunktionen). Zum Beispiel kann die Gebäudefunktion eine Funktion zum Regeln von Raumtemperatur, Beleuchtung und/oder Sicherheitseinrichtung sein.

Die vorliegende Offenbarung betrifft auch das Verwenden des bestimmten Systems zum Steuern und/oder Regeln und/oder Überwachen von Funktion der industriellen Automatisierung. Das bestimmte System kann ein System zur Steuerung, Reglung und/oder Überwachung einer Funktion der industriellen Automatisierung (z.B. einer oder mehrerer Funktionen eines industriellen Herstellungsprozesses oder Inspektionsprozesses, bspw. einer Industriemaschine). Der Ursprungs-Programmcode kann folglich ein Programmcode sein oder einen Teil davon zur Steuerung, Reglung und/oder Überwachung von Funktionen der industriellen Automatisierung (z.B. einer oder mehrerer Funktionen eines industriellen Herstellungsprozesses oder Inspektionsprozesses, bspw. einer Industriemaschine).

Die vorliegende Offenbarung betrifft auch das Verwenden des bestimmten Systems zum Überwachen einer Umgebung und/oder eines weiteren Systems. Das bestimmte System kann ein System zum Überwachen einer Umgebung und/oder eines weiteren Systems sein (z.B. ein System zu Anomalie- und/oder Fehlerdetektion in der Umgebung und/oder des weiteren Systems). Der Ursprungs-Programmcode kann folglich ein Programmcode sein oder einen Teil davon zum Überwachen einer Umgebung und/oder eines weiteren Systems (z.B. ein System zu Anomalie- und/oder Fehlerdetektion in der Umgebung und/oder des weiteren Systems).

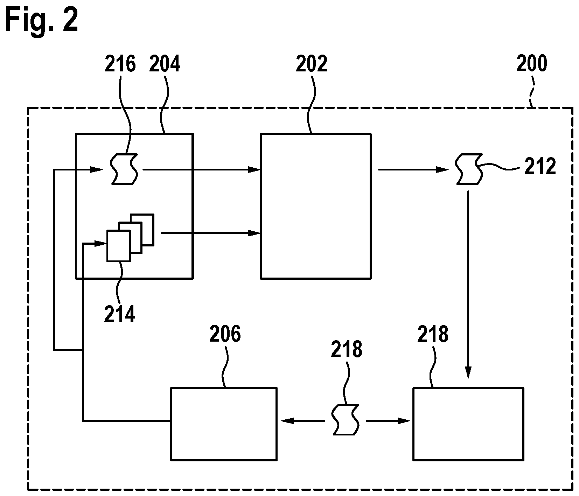

**Fig.** 2 zeigt schematisch eine Umgebung 200, in der die Verfahren gemäß der vorliegenden Offenbarung ausgeführt werden können. In manchen Beispielen ist die Umgebung eine Test- oder Entwicklungsumgebung für Programmcode (bspw. mit einer Schnittstelle, die einem Benutzer die Bedienung der Umgebung 200 ermöglicht). Die Umgebung kann einen oder mehrere Recheneinheiten umfassen (z.B. einen Computer). Jede Recheneinheit kann einen Prozessor oder mehrere Prozessoren und/oder einen Arbeitsspeicher umfassen. Die Recheneinheit kann netzwerkbasiert (bspw. ein Cloud-System oder ein entfernter Server) und/oder verteilt sein.

Die Umgebung 200 kann mehrere Module umfassen. Die Umgebung 200 kann ein erstes Maschinenlern-System 202 enthalten, das dazu ausgelegt eine Übersetzung eines Programmcodes 216 von der Zielsprache in die Ursprungssprache zu erzeugen (d.h. einen reproduzierten Programmcode 212) und/oder dazu ausgelegt ist, aus einer Spezifikation 214 eines Programmcodes den dazugehörigen Programmcode 212 zu erzeugen. Die Umgebung hat weiterhin eine Schnittstelle 204, um eine automatisiert erzeugte Übersetzung eines Programmcodes und/oder eine automatisiert erzeugte Spezifikation eines Programmcodes zu erhalten (z.B. eine Schnittstelle zu einem Speicher oder eine Eingabeschnittstelle).

In manchen Beispielen kann die Umgebung 200 ein zweites Maschinenlern-System 206 zur Übersetzung des Ursprungs-Programmcodes 218 aus der Ursprungssprache in die Zielsprache, um die automatisiert generierte Übersetzung 216 zu erhalten und/oder Erzeugen der automatisiert generierten Spezifikation 214 des Ursprungs-Programmcodes 218 enthalten. Das zweite Maschinenlern-System 204 kann mit dem ersten Maschinenlern-System 202 kommunikativ gekoppelt sein (um erzeugte Übersetzungen und/oder Spezifikationen an das erste Maschinenlern-System 202 zu übertragen).

In manchen Beispielen sind das erste Maschinenlern-System 202 und das zweite Maschinenlern-System 204 in einem einzigen Maschinenlern-System kombiniert.

Die Umgebung 200 kann zudem ein Bewertungsmodul 206 umfassen, dass ausgelegt ist zum Bestimmen einer Äquivalenz des Ursprungsprogrammcodes und des reproduzierten Programmcodes. Das Bewertungsmodul 206 kann dazu eine oder mehrere der oben beschriebenen Techniken einsetzen.

Offenbart wird weiterhin ein Computer-Programm, das Anweisungen enthält, die, wenn sie von einem Computer-System ausgeführt werden, das Computer-System dazu bringen, die Bewerten von automatisiert generierten Übersetzungen und/oder Spezifikationen eines Programmcodes der vorliegenden Offenbarung (oder einen oder mehrere der vorgelagerten oder nachgelegten Verfahren). Das Computer-Programm kann z.B. in interpretierbarer oder in kompilierter Form vorliegen. Es kann (auch in Teilen) zur Ausführung z.B. als Bit- oder Byte-Folge in den RAM eines Computers geladen werden.

Offenbart wird weiterhin ein Computer-Programm-Produkt, das ein Computer-Programm der vorliegenden Offenbarung enthält.

Offenbart wird weiterhin ein Signal, das ein Computer-Programm der vorliegenden Offenbarung enthält und/oder codiert.

## Patentansprüche

1. Verfahren zum Bewerten von automatisiert generierten Übersetzungen und/oder Spezifikationen eines Programmcodes, umfassend:
Erhalten einer automatisiert generierten Übersetzung eines Ursprungs-Programmcodes aus einer Ursprungssprache in eine Zielsprache und/oder einer automatisiert generierten Spezifikation eines Ursprungs-Programmcodes;
Erhalten des Ursprungs-Programmcodes;
Erzeugen eines reproduzierten Programmcodes aus der erhaltenen Übersetzung und/oder der erhaltenen Spezifikation unter Verwendung eines ersten generativen Maschinenlern-Systems,
wobei das generative Maschinenlern-System dazu ausgelegt ist, eine Übersetzung eines Programmcodes von der Zielsprache in die Ursprungssprache zu erzeugen und/oder wobei das generative Maschinenlern-System dazu ausgelegt ist, aus einer Spezifikation eines Programmcodes den dazugehörigen Programmcode zu erzeugen; und
Bestimmen einer Äquivalenz des Ursprungsprogrammcodes und des reproduzierten Programmcodes, um die automatisiert generierte Übersetzung und/oder Spezifikation des Ursprungs-Programmcodes zu bewerten.

2. Verfahren gemäß Anspruch 1, wobei das generative Maschinenlernsystem ein generatives Sprachmodell umfasst, insbesondere ein Large-Language-Modell.

3. Verfahren gemäß einem der Ansprüche 1 oder 2, wobei das Bestimmen der Äquivalenz durchführen eines automatisierten Software-Testverfahrens umfasst, insbesondere wobei das automatisierte Software-Testverfahren eine formale Prüfung der Äquivalenz des Verhaltens des Ursprungs-Programmcodes und des rekonstruierten Programmcodes umfasst.

4. Verfahren gemäß Anspruch 3, wobei das automatisierte Software-Testverfahren Fuzzing, Model Checking und/oder Prüfungen der formellen Äquivalenz umfasst.

5. Verfahren gemäß einem der Ansprüche 1 bis 4, wobei das Bestimmen der Äquivalenz erzeugen von Beschreibungen umfasst, warum eine Äquivalenzprüfung fehlgeschlagen ist und/oder Ausgeben von Beispielen von Testdaten, für die eine Äquivalenzprüfung fehlgeschlagen ist.

6. Verfahren gemäß Anspruch 5, weiter umfassend bereitstellen von Informationen, die ein Modul zur automatisierten Übersetzung und/oder zur automatisierten Erzeugung von Spezifikationen verwenden kann, um Fehler zu beheben, die zu einem Fehlschlagen der Äquivalenzprüfung geführt haben.

7. Verfahren gemäß Anspruch 6, wobei bereitstellen von Informationen hinzufügen der Informationen in einen Prompt an ein generatives Maschinenlern-System enthält.

8. Verfahren gemäß einem der Ansprüche 5 bis 7 weiter umfassend:
Anpassen der Übersetzung und/oder der Spezifikation des Ursprungs-Programmcodes unter Verwendung der Beschreibungen, warum eine Äquivalenzprüfung fehlgeschlagen ist und/oder Ausgeben der Beispiele von Testdaten, für die eine Äquivalenzprüfung fehlgeschlagen ist-zum Erzeugen eines angepassten Ursprungs-Programmcodes und/oder der bereitgestellten Information.

9. Verfahren gemäß einem der Ansprüche 1 bis 8, weiter umfassend:
Übersetzen des Ursprungs-Programmcodes aus der Ursprungssprache in die Zielsprache, um die automatisiert generierte Übersetzung zu erhalten und/oder Erzeugen der automatisiert generierten Spezifikationen des Ursprungs-Programmcodes,
insbesondere wobei das Übersetzen und/oder Erzeugen unter Verwendung eines zweiten generativen Maschinenlern-Systems geschieht.

10. Verfahren zum Implementieren eines Programmcodes, umfassend:
Durchführen einer der Verfahren zum Bewerten von automatisiert generierten Übersetzungen und/oder Spezifikationen eines Programmcodes gemäß einem der Ansprüche 1 bis 9; und
Implementieren eines Programmcodes in einer Software-Komponente, nachdem das Bestimmen der Äquivalenz des Ursprungsprogrammcodes und des reproduzierten Programmcodes die Äquivalenz der Programmcodes ergeben hat,
insbesondere wobei das Implementieren Herstellen eines Systems, das die Software-Komponente enthält, umfasst oder Übertragen der Software-Komponente auf ein System, insbesondere wobei das System ein Steuergerät ist.

11. Umgebung, die dazu ausgelegt ist, die Verfahren gemäß einem der vorangehenden Ansprüche 1 bis 10 auszuführen.

12. Programm, der Befehle enthält, die, wenn sie in einer Recheneinheit ausgeführt werden, die Recheneinheit dazu veranlassen, die Schritte eines der Verfahren der Ansprüche 1 bis 10 auszuführen.
